# EUROPEAN PATENT SPECIFICATION

(11) **EP 2 864 729 B1**
(45) Date of publication and mention of the grant of the patent: **12.02.2020**
(21) Application number: 13737449.2
(22) Date of filing: 21.06.2013
(51) Int. Cl.: F28D 20/02

(54) **A CONTAINER FOR PCM**
BEHÄLTER FÜR LATENTWÄRMESPEICHERMATERIAL
RÉCIPIENT POUR MATÉRIAU À CHANGEMENT DE PHASE

(30) Priority: 21.06.2012 NL 2009052; 01.08.2012 WO PCT/NL2012/050544
(43) Date of publication of application: 29.04.2015
(73) Proprietor: Autarkis B.V., 7451 PK Holten (NL)
(72) Inventor: SCHMITZ, Antonius Henricus Hubertus, NL-6061 CT Posterholt (NL); VAN DORP, Henk Willem, NL-2716 NL Zoetermeer (NL); VAN KEMPEN, Marcellus Henricus Gerardus, NL-7313 GC Apeldoorn (NL)
(74) Representative: van Essen, Peter Augustinus
(86) International application number: PCT/NL2013/050445
(87) International publication number: WO 2013/191554

(56) References cited:
- EP-A1- 0 240 583
- JP-A- 59 197 798
- JP-A- 2007 147 165
- US-A- 4 612 974
- US-A- 5 005 368
- US-A1- 2008 202 128

## Description

### Field of the invention

The invention relates to a container for PCM, a PCM Unit, a PCM module comprising a series of PCM units, and a climate system comprising a PCM module. The invention further relates to a method for conditioning at least the temperature of a building space.

### Background of the invention

Encapsulated PCM product are known.

EP2180108 discloses an extrusion profile part which comprises an upper wall and a lower wall and lengthwise extending ribs connecting the upper and lower wall and defining lengthwise extending channels in the longitudinal, i.e. extrusion direction, of said ceiling panel. For a climate system, the extrusion panels can hold phase change material (PCM).

WO2009/101398 discloses a PCM (phase change material) pack comprising a laminate of a first conducting panel and a second conducting panel enclosing a portion formed primarily of PCM; wherein said portion of PCM incorporates thermal conductors.

EP240583 discloses a heat storage composition that contains calcium chloride hexahydrate as the main component and an appropriate amount of a nucleating agent combination which is composed of barium sulfide, barium chloride dihydrate and strontium chloride hexahydrate or of barium chloride dihydrate and strontium chloride hexahydrate and optionally contains an appropriate amount of a thickening agent combination composed of an ultrafine silica powder and glycerin. According to the document, the nucleating agent is for inhibiting supercooling. EP240583 further discloses latent heat storage capsules that contain the above heat storage composition. EP240589 requires the PCM material to comprise a nucleating agent as well as a thickening agent for the PCM-filled capsules to work.

### Summary of the invention

A disadvantage of the prior art is that in known climate systems that use PCM material, either the amount of PCM per volume of building space is insufficient for conditioning the temperature of the building during a working day, and/or the structures holding the PCM material get too expensive, and/or the lifetime of the PCM units is insufficient.

Hence, it is an aspect of the invention to provide an alternative PCM holding unit, which preferably further at least partly obviates one or more of above-described drawbacks.

The invention thus provides a container for PCM according to claim 1.

The container allows a PCM unit that is dimensionally stable. Furthermore, such a PCM unit can be used for a long period of time without degradation, even in stationary situations. The container is further cheap to produce. A blow-moulded container, for instance, provides a sure and leak-tight container for holding the PCM material. In other words, the container of the current description in their different embodiments provides one or more of the following enhancements. The embodiments provide more sure and leak-free panels as the amount of welds to obtain a sealed container can be reduced significantly. The panels have improved dimensional stability, making it possible to decrease a space between panels in a stack of PCM-panels. Furthermore, the construction of the container reduces a decrease of latent heat storage capacity in time when the container is filled with inorganic PCM.

The PCM units of the invention usually have a capacity of at least 9 kilogram PCM per square meter surface area.

PCM can be provided in micro encapsulation. In micro encapsulation, in general, the PCM is provided in smaller agglomerates, for instance. PCM can also be provided via macro encapsulation. Both micro and macro encapsulation of PCM can be done on most known types of PCM. For all combinations of the specific way of providing PCM and the PCM used there are disadvantages. It was found that using the invention, it was possible to increase universal application of PCM. In particular, it was found that macro encapsulation of PCM can be used in climate conditioning.

In this description, the phase change material or PCM is a material that in the container can be in a liquid form or in a solid form. In use, it changes its phase between liquid and solid, and in that way either takes up heat (by melting) or releases heat (by solidifying. In the container of the invention, the PCM as such can poured in the container in its liquid form.

Alternatively, PCM in a powder form may be used. In an embodiment, the PCM may comprise a PCM substance, like Calciumchloride hexahydrate or another PCM substance described below, that is mixed with for instance aramid slurry and formed into a PCM powder.

In an embodiment, the container is filled with PCM material via said filling opening.

A series of the PCM units can be combined into various different types of PCM modules for used in different types of climate systems.

One important aspect of the PCM units is that it was found that extreme undercooling of inorganic PCM can be reduced so that the regeneration of the PCM units is much easier if the PCM units melt for less than 80%, in particular less than 85%. It was (also) found that for different applications, different thicknesses of the PCM layer in a unit were optimal.

For use in convection systems, it was found that in an embodiment the PCM unit has a thickness resulting in a PCM layer of less than 3 cm thick. In this respect, in particular the convection is forced convection by means of an air displacement unit like a ventilator, or internal induction. In an embodiment, the PCM layer has a thickness of 0.5-2 cm. In particular, the PCM layer in the PCM unit has a thickness of between 0.8 and 1.5 cm. It was found that in particular in forced convection units, when using laminar flow of air and a slit width of between 1 and 6 mm, this provides an optimal PCM thickness. If the temperature difference between the PCM and air flowing around the PCM unit is low, for instance like the temperature differences occurring in the Netherlands, the slit width or distance between PCM units is about 3-5 mm. If the temperature difference is larger, for instance in more tropical regions, the slit width or distance between PCM units is larger that that, about 4-7 mm. The slit widths allow an energy-efficient flow of air around the PCM units. Modification of a slit width allows optimal use of the PCM unit, in particular in view of its width.

In another embodiment, in particular in cases where free convection takes place or heat exchange takes place through radiation, the PCM unit has a thickness resulting in a PCM layer of less than 2 cm. In particular, the PCM layer is less than 1.5 cm. In an embodiment, the PCM layer in the PCM unit is between 0.3 and 1.5 cm. In particular for use in PCM modules for use in floors, a thickness at the lower side of the range is preferred. Thus, a PCM layer of between 0.5 and 1.3 cm provides good results: the PCM in the PCM units remain stable in time, i.e. retain their latent heat storage capacity, and the heat storage capacity is still large enough.

When the PCM units are used in wall systems, like for instance described in PCT/NL2012/050170, the thickness of the resulting PCM layer in the PCM units is between 0.5 and 1.5 cm.

When the PCM units are used in ceiling panels, like for instance in the way disclosed in EP2180108, the thickness of the PCM unit is such as to result in a PCM layer of between 0.5 and 1.5 cm thickness.

In an embodiment, said elongated compartments are in fluid communication with said filling opening. This allows easy filling.

In an embodiment, said elongated compartments are in fluid communication with one another. Thus, when one filling opening is present, the compartments can be filled.

In an embodiment, said compartments extend in longitudinal direction. Thus, a prolonged life is provided to PCM filling said container. This in particular is the case when the PCM unit is used with its longitudinal direction essentially perpendicular to the gravity vector.

In an embodiment, a partitioning wall is formed by an indentation formed by a fold in one facing wall and which runs up to an inner surface of the opposite facing wall. The inwardly folded parts of the facing wall thus form walls of the compartments. When the container is produced using blow moulding, this was found to be a simple way of providing these partitioning walls. It is clear that often, the indentations in one wall completely touch the opposite facing wall and is in fact in the production process completely melted or fused with that opposite facing wall. It may, off course, be possible that the indentation does not completely touch the surface of the opposite facing wall. It is then said to extend functionally up to that opposite facing wall. A purpose of the partitioning wall is to prevent segregation of the PCM. In the indentations, a sensor for determining the temperature may be provided. Such a sensor may determine the temperature at the centre of the PCM. As it is not in direct contact with the PMC, degradation and other detrimental effects on the sensor ore prevented. In a simple embodiment, the sensor may comprise a temperature sensor like for instance a bimetal sensor.

In an embodiment, said partitioning walls extend up to a distance from the end walls. Thus, the remaining part of the cavity near the end walls connects the compartments. This allows an easy filling of all the compartments. The remaining part of the container cavity between the end of the partitioning walls and the and walls this provide a duct that provides a fluid coupling between compartments.

The partitioning walls comprise barriers that extend away from the partitioning wall. For instance, in case the partitioning walls extend in longitudinal direction, or, in other words, in transverse direction. The barriers prevent PCM components from collecting on the partitioning walls and eventually flowing off the partitioning walls and collecting at an end of the container.

In an embodiment, said barriers are provided at the longitudinal ends of the partitioning walls.

In an embodiment, said barriers extend at least in the same direction. Thus, when the container filled with PCM is placed on a wall opposite to the extension direction of the barriers, the barriers prevent components of the PCM to segregate. For instance, salt in salt hydrates of salt hydrate PCM can segregate. The barriers prevent segregated salt from flowing off the partitioning walls. In an embodiment, the partitioning walls can be provided with barriers at both sides. This allows use of the container that is filled with PCM on two opposite sides. In other words, the PCM unit can be placed on both longitudinal walls.

In an embodiment, at least one of said facing walls comprise a series of indentations formed by folds in that facing wall and which run up to an inner surface of the opposite facing wall. In particular, they extend up to a distance from the end walls of said container. The indentations provide partition walls as dividers dividing said container into said series of compartments that are in fluid connection with one another.

It was found that using indentations, it was possible to provide the container in a blow-moulding process. This allows easy production of a leak-tight container.

In an embodiment, said indentations have an inner width of less than 2 mm. The inner width is thus the distance between walls of a fold. In an embodiment, during production, the walls of the indentation can again touch one another or melt together again to form a single wall. For instance, when using a blow-moulding process, for instance the inner pressure of the container is increased a little, pressing the walls of the indentation onto one another again.

In an embodiment, said indentations run substantially in longitudinal direction of said container, extending over 80-98 % of the length of the container, in particular extending over 90%-98% of the length of the container. Thus, this provides a fluid coupling between compartments that are bounded by the indentions.

In an embodiment, said indentations extend in longitudinal direction of said container, and have ends near the end walls of the container. The ends are provided with barriers extending away from said longitudinal direction. Thus, the barriers extend away from the longitudinal walls of the indentations, i.e., the walls extending between facing walls.

In an embodiment, said at least filling opening is provided in an end wall. In an embodiment, the at least one filling opening is aligned with a compartment. This allows easy filling of the compartment, and in fact the container if the compartments are mutually in fluid coupling. In fact, the container can be provided with several filling openings and, if needed, also with openings that allow air to escape during filling with PCM. More openings, however, can increase the risk of leakage.

In an embodiment, said indentations have an interspacing of less than 2 cm, in particular less than 1.5 cm. In fact, the compartments thus have such an inner width.

In an embodiment, the container has a length of between 40 and 100 cm. In an embodiment, the container has a width of between 15 and 30 cm. In an embodiment, the container has a thickness of 0.5-2 cm. In an embodiment, the container has a wall thickness of between 0.5 and 3 mm. In particular said container when filled with PCM provides a PCM layer with a thickness of between 0.5 and 1.5 cm.

In an embodiment, the container is produced as one part. In an embodiment, this means that it is produced from one piece of material.

The container of the invention is produced in a blow-moulded process. Blow moulding is a production process that allows serial production at low costs and sure, in particular providing a leak-tight container. Many processes in the art require welds or other seams for adding various pieces together, in particular to form a single cavity which comprise a series of compartments that are in fluid communication.

In an embodiment, the container is made from a thermoplastic material.

The invention further provides a PCM unit comprising the container described above and filled with PCM. In an embodiment, said PCM substantially consisting of an aqueous solution of a salt hydrate.

The invention further relates to a PCM module, comprising a series of PCM units of the preceding claim, wherein PCM units are positioned with their facing walls parallel, having an interspacing of less than 1 cm, in particular less than 0.5 cm.

The invention further relates to a climate system for a building, arranged for controlling at least the temperature, said climate system comprising at least one PCM module described above, further provided with an air displacement unit adapted for provided a laminar flow of air along said PCM units.

In an embodiment, said climate system has an average design heating and/or cooling capacity and said climate system comprising an amount of PCM in said at least one PCM module selected such that the capacity of the PCM is about 105-130 % of the average design capacity, in particular 110% - 120 % of the average design capacity.

The invention further pertains to a method for conditioning at least the temperature in a building space, comprising the climate system described above, wherein an airflow is passed though said PCM module at a laminar flow speed. The airflow along the facing walls of a PCM unit is thus essentially laminar.

In an embodiment, the invention further pertains to a PCM module comprising a series of PCM units of the type described in this description.

In an embodiment, the invention further pertains to a climate system comprising at least one PCM module of the type described in this description.

The invention further pertains to a method for conditioning at least the temperature in a building space, using a PCM module and/or the climate system described in this description, wherein a laminar flow of air is directed along said PCM units at a laminar air speed.

The invention further pertains to a PCM unit, said PCM unit comprising a container with a filling opening which is closed with a cap, and wherein the container is filled with a Phase Change Material (PCM), the container having substantially the shape of a rectangular panel with a longitudinal axis and with walls with the largest surface area defined as facing walls, and with end walls and longitudinal walls, wherein the container comprises a cavity which is divided by dividers between the facing walls into a number of elongated chambers extending in longitudinal direction, which form ducts from one end wall to an opposite end wall, the ducts being coupled to form one cavity by a channel extending along each of the end walls, wherein the walls of the container and the dividers are made from one piece of material.

In an embodiment, the elongated chamber comprises a longitudinal axis and a surface of a divider forming a wall of said elongated chamber bends at an end of the divider to the longitudinal axis to form a barrier.

In an embodiment, a divider is formed by a fold in a facing wall and runs at least substantially up to an inner surface of the opposite facing wall and ends of the fold extend up to a distance from the end walls of said container. In an embodiment thereof, the dividers alternately are a fold in a facing wall and an opposite facing wall.

In an embodiment, the filling opening is provided in an end wall of the container, the filling opening is aligned with one of the elongated chambers.

In an embodiment, the container and dividers have been obtained by using a blow-moulding process.

In literature, the label "PCM" is used for many types of material. In particular, in an embodiment of the invention, it is a substance with a high heat of fusion which, melting and solidifying at a certain temperature, is capable of storing and releasing large amounts of energy. Heat is absorbed or released when the material changes from solid to liquid and vice versa; thus, PCM is also classified as latent heat storage (LHS) material. when PCMs reach the temperature at which they change phase (their melting temperature) they absorb large amounts of heat at an almost constant temperature. The PCM continues to absorb heat without a significant rise in temperature until all the material is transformed to the liquid phase. When the ambient temperature around a liquid material falls, the PCM solidifies, releasing its stored latent heat. Within the human comfort range of 18° to 30°C, some PCMs are very effective. They store 5 to 14 times more heat per unit volume than conventional storage materials such as water, masonry or rock.

In general, there exist organic and inorganic PMC. PCM can for instance be based upon water with paraffin or fatty acids. In an embodiment, the phase change material is selected from the group consisting of paraffin, thermoplastic polymers, organic acids, aqueous solutions of salts, chlathrate hydrates, salt hydrates, mixtures of salt hydrates, salts and eutectic blends of salts and alkali metal hydroxides.

In the current invention, particularly suited is PCM based upon salt hydrates. The general formula for these salt hydrates is M•nH₂O. In particular, in the current invention, CaCl₂•6H₂O can be used. This material in general has a melting temperature of about 28 °C. Using additives, this temperature can be set between about 15-35 °C. In use in buildings for climate systems, in general PCM is used which has a melting temperature of between 18°C and 26°C. For conditioning zones in a building at a temperature that is comfortable for human beings, NEN 15251 for instance defines a temperature of 19°C if the outdoor temperature is below 0°C, up to a maximum of 27°C if it is tropically warm outside. In an embodiment, the PCM may comprise additives that modify a phase change temperature. For instance, MgBr may be added.

In an embodiment, the PCM units are filled with liquid PCM in the following way. A filling spear is inserted via a filling opening in the container. In case of one filling opening, the diameter of the filling spear is less than the diameter of the filling opening, allowing air to escape during filling. The filling spear is in an embodiment inserted almost to an end wall opposite to the filling opening. Then, the container is filled. During filling, the filling spear may be lifted slowly. In an embodiment the filling spear follows the level of PCM. The filling using the filling spear prevents inclusion of air in the PCM during filling. The container may have several filling openings, preferably in the same end wall. One or more openings can be used for entering a filling spear. An additional opening may be left free for allowing air to escape from the container, in fact thus forming an air-escape opening. At least the filling openings are in line with at least one of the chambers. In an embodiment, it was found that in order to prevent so-called undercooling of the PCM, the container was not fully filled. In fact, a maximum of below 5% was left filled with air. Furthermore, some residual air in the container may buffer shrinkage of the PCM when cooling it.

The invention further relates to a container for PCM, wherein said container is produced using blow-moulding and has the shape of a rectangular panel with a longitudinal axis, a front and back facing wall, end walls and longitudinal walls enclosing a container cavity, said blow-moulded container further comprising a filling opening and said container cavity is divided into a series of elongated compartments and comprising partitioning walls extending between said front and back facing wall. This PCM container may further comprise any of the features describes above, or mentioned in the detailed embodiments below.

The invention further relates to a container for PCM, wherein said container has the shape of a rectangular panel with a longitudinal axis, a front and back facing wall, end walls and longitudinal walls enclosing a container cavity, said blow-moulded container further comprising a filling opening and said container cavity is divided into a series of elongated compartments and comprising partitioning walls extending between said front and back facing wall. This PCM container may further comprise any of the features describes above, or mentioned in the detailed embodiments below.

The invention further relates to a PCM unit, said PCM unit comprising a blow-moulded container having the shape of a rectangular panel with a longitudinal axis and with walls with the largest surface area defined as front and back facing walls, and with end walls and longitudinal walls, said blow-moulded container further comprising at least one filling opening, wherein at least one of said facing walls having a series of indentations formed by folds in that facing wall and running at least substantially up to an inner surface of the opposite facing wall and extending up to a distance from the end walls of said blow moulded container, said indentations providing partition walls as dividers dividing said blow-moulded container into a series of chambers that are in fluid connection.

The terms "upstream" and "downstream" relate to an arrangement of items or features relative to the propagation of air along the PCM units.

The term "substantially" herein, such as in "substantially parallel" or in "substantially consists of', will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 shows a 3D view of an embodiment of a PCM unit;
Figure 2 shows a front view of the PCM unit of figure 1;
Figure 3 shows a cross section as indicated in figure 2;
Figure 4 shows a detail of a cross section of the surrounding of a filling opening of the PCM unit of figure 2;
Figure 5 shows a detail of a cross section as indicated in figure 3;
Figure 6 shows a detail of figure 5;
Figures 7A and 7B shows several embodiments of barriers or dividers for preventing segregation of the PCM;
Figure 8 shows a PCM module with PCM units of figure 1;
Figure 9 a 3D view of a rail for mounting in a PCM unit;
Figure 10 a cross sectional view of figure 9;
Figure 11 a spacer for PCM units;
Figures 12 and 13 measurements on PCM material for filling PCM units, showing effects of supercooling.

The drawings are not necessarily on scale

### Description of preferred embodiments

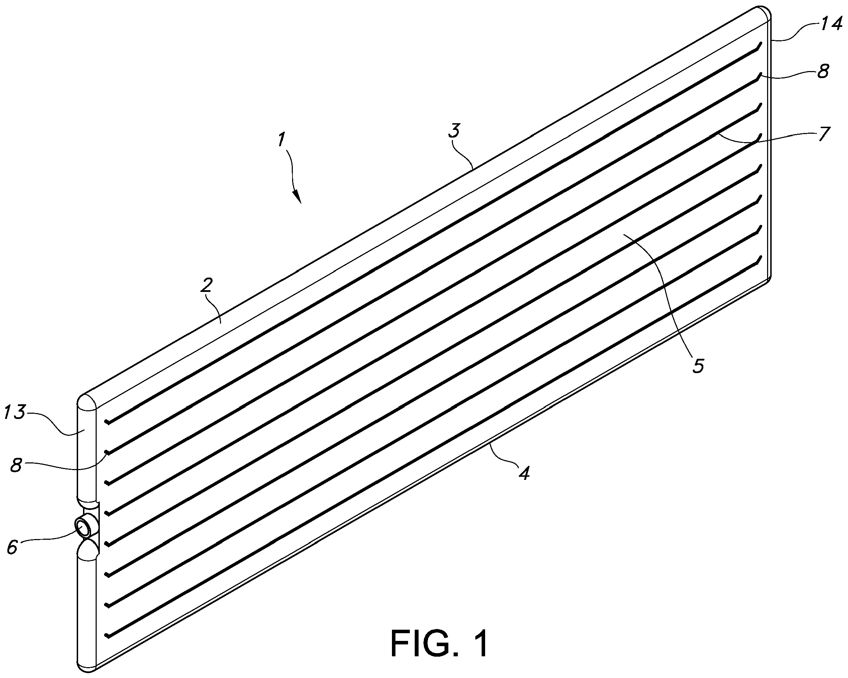

Figure 1 schematically depicts a 3D view of a PCM unit 1. PCM unit 1 comprises a container 2 that is filled with PCM. The substantially rectangular, panel-shaped container 2 has front and back facing walls 5, 5'. The container 2 further comprises end walls or ends 13, 14, and longitudinal walls 3 and 4. The container 2 further has a filling opening 6 in one of its end walls. In this embodiment, the filling opening is closed via a stop (not shown) that is applied into the filling opening 6. This stop can for instance be fixed using friction welding. In this embodiment, only one opening 6 is used for both filling and allowing air to escape during filling. The end wall in an embodiment may also have several openings. One or more can be used for filling, and it may be possible to use one or more openings as air escape openings.

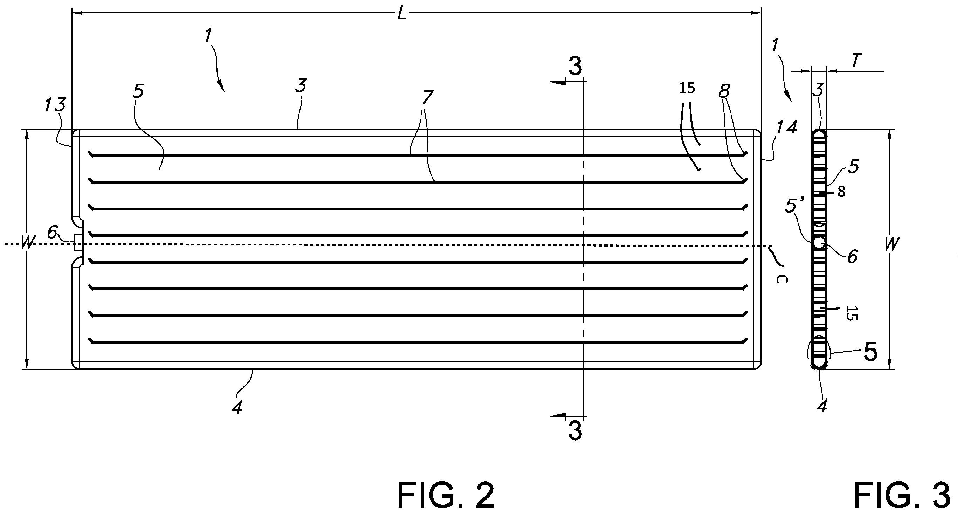

PCM unit 1 further comprises indentations 7 in at least one facing wall 5, 5'. These indentations 7 are formed through folds in at least one of the facing walls 5, 5'. The indentations 7 provide obstacles inside the blow-moulded container, which increase the life span of the PCM material. In an embodiment, shown in figures 3-6, these indentations 7 run all the way up to the inner surface of the opposite facing wall 5, 5'. In this way, the container 2 is divided into compartments 15. The walls 11 of the indentations 7 form separating walls or partitioning walls in the cavity of container 2. The indentations 7 can also be seem as grooves in the outer surface PCM unit 1.

In order to facilitate filling of the blow-moulded container 2, the indentations 7 run up to a distance from the ends 13,14 of the blow-moulded container. In this way, the compartments that are created by the indentations forming partition walls are in fluid communication. Thus, all the created compartments, created though indentations 7, can be filled with PCM via one filling opening 6. In an embodiment, the indentations 7 end shortly before the end walls 13, 14. In an embodiment, the indentations 7 end between 0,3 and 1,5 cm before the ends 13, 14. In a specific embodiment, the indentations end between 0,2 and 1 cm before the ends 13, 14.

In an embodiment, the indentations 7 are made in each of the facing walls 5, 5' and run up to the inner surface of its opposite facing wall, 5, 5'. In this way, additional to the partitioning function, the indentations 7 also have a function of providing additional strength to the container 2. In an embodiment, the indentations 7 are alternatingly provided in one facing wall 5 and in the opposite facing wall 5'. This further improves dimensional stability of the container 2 when the PCM in use for instance exchanges heat at one side.

In an embodiment, the indentations 7 run substantially parallel to the longitudinal axis of the container 2. In that way, when resting the PCM unit 1 on one of its longitudinal walls 3, 4, the indentations 7 stabilize the PCM material inside the container 2. In an embodiment, the width of the indentations 7 is small. In fact, in an embodiment the inner width A is smaller than 2 mm. In particular, the inner width A of the indentations 7 is below 1.5 mm.

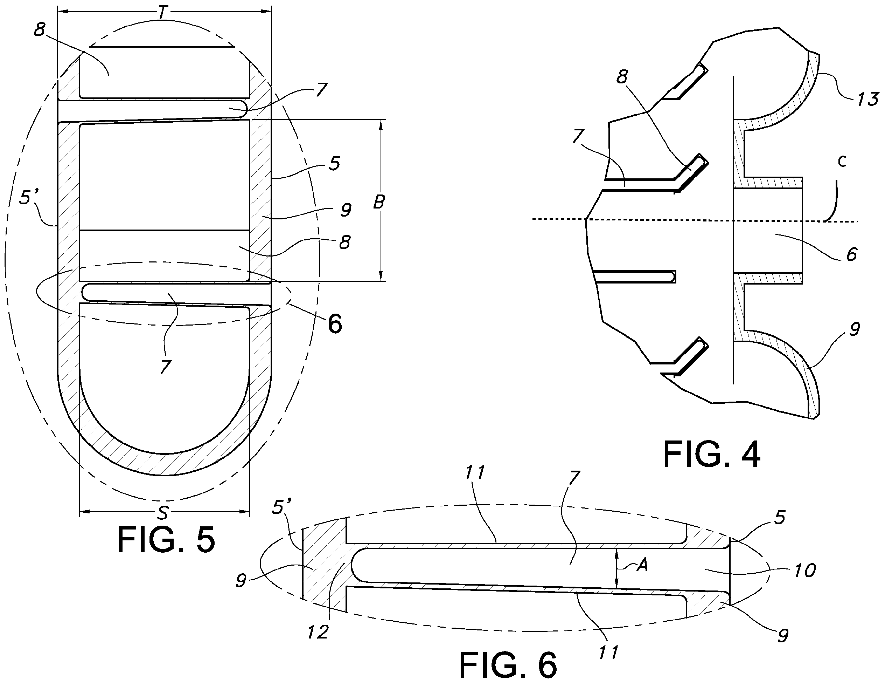

In the embodiment of figures 1-6, the indentations 7 at their longitudinal ends have ends 8 that extend from the indentation 7. In fact, in the embodiment shown in the drawings, the ends 8 run away from the further longitudinal direction of the indentations 7, i.e., extend in the transverse direction. In fact, this can best be seen in figures 4 and 5. Purpose of these ends is to provide an additional barrier for stabilizing the PCM. Barriers or ends 8 extend at least in the same direction. Thus, the PCM unit can be positioned either on its facing walls 5, 5' ("flat"), or on its longitudinal wall 4 in a stationary use.

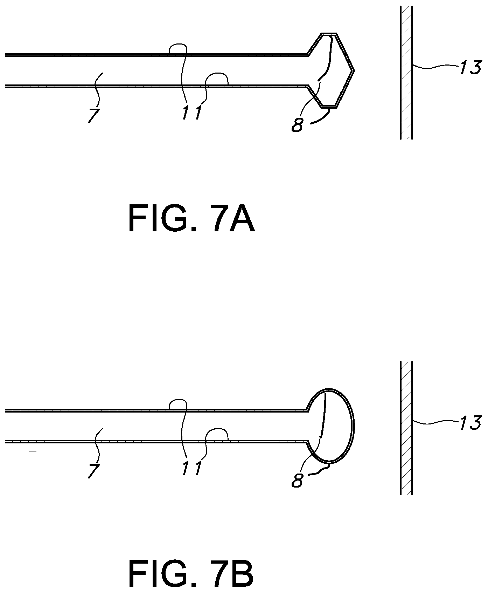

The barriers may also extend in both directions. In figures 7A and 7B, an embodiment of this is shown. For instance, the indentation 7 may end in a triangular shape or in an indentation that runs almost perpendicular to the indentation 7 for providing a stop or barrier. Alternatively, the indentation may end in a T-shape, providing barriers extending in both directions. The stop or barriers prevents the material of the PCM to segregate and flow down over the edge of the indentation wall 11. The barriers 8 extend between 1-4 mm in transverse direction. In an embodiment, the barriers 8 extend between 1.5 and 3 mm.

As mentioned, the PCM units 1 have a container 2. It was found that using blow-moulding techniques, it is possible to produce containers for the PMC that are leak tight, cheap to produce, and that are dimensionally stable. Dimensional stability is desirable for some applications in which the PCM units 1 are used in a heat-exchanging setting. This is for instance the case in PCM modules that are use in convection units in climate systems. It was found that in such PCM modules, when providing a laminar flow of air along the facing walls (5, 5'), the width of air gaps between the PCM units 1 is to be about 3.7 mm. The rounded shape of the longitudinal walls (3, 4) reduced the air resistance of the PMC units 1 when used in a PCM module comprising a stack of PCM units 1. This shape further reduces the occurrence of turbulence along the facing walls 5, 5'.

The indentations in the facing walls 5, 5' of the container walls are in an embodiment produced in the blow moulding process. In an embodiment, the indentations 7 are formed from wall material folded inward. This can be produces using thin, elongated elements in the walls of a blow moulding mould that push inward into a container pre-shape. While the container wall 5, 5' is still hot and highly flowable, these elements push a part of the container wall inward, using that wall material as wall material for the walls 11 of the indentations 7. It may also be possible to use for instance the inner pressure of a blow-moulded container 2 to press the indentation walls 11 onto one another again.

Using the indentations 7, compartments 15 can be created in the blow-moulded container 2. In an embodiment, the distance between indentations 7, i.e., the space B between adjacent indentation walls is less than 2 cm. In particular, to provide a longer working life span of the PCM, the distance B between indentations 7 is less than 1.5 cm. In order not to lose too much volume, the distance B between indentations 7 is in an embodiment more than 0.8 cm.

The container 2 as mentioned is produced using blow moulding. As such, blow moulding is a polymer shaping technique known to a skilled person. In an embodiment, the container is made from HDPE (High Density PolyEthylene) or PP (PolyPropylene).

As mentioned above, a PCM unit 1 of the blow moulded container 2 filled with PCM can be combined with similar PCM units 1 to form a PCM module, in particular for use in a climate system for at least controlling the temperature in a space in a building. To that end, the PCM units 1 can for instance be combined by placing them with the facing wall of one PCM unit 1 facing an opposite facing wall of a next PCM unit 1.

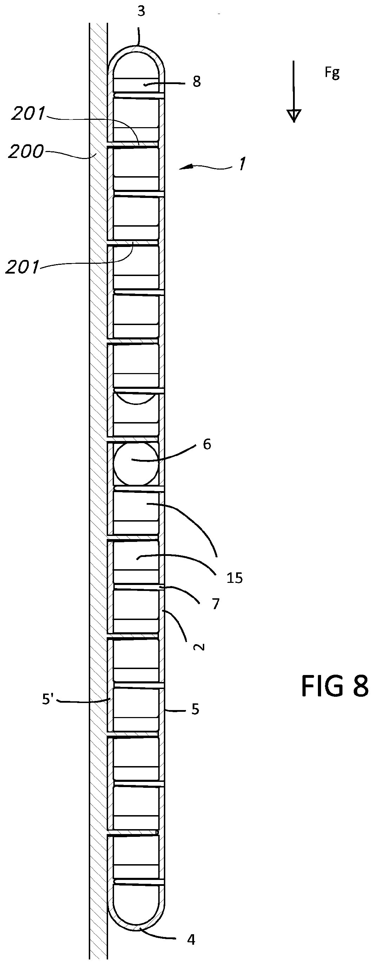

Figure 8 show a PCM module that can have a series of PCM units 1 installed.

In an embodiment, as mentioned above, a design limit the flow speed of air can be limited to 2 m/s. Then, a design is made regarding the amount of fresh air that is needed in for instance a building or a space. Furthermore, in the design the amount of heat storage is set. Thus, the required temperatures during for instance a 24-hour cycle us determined. Isolation conditions of a building can be taken into account, as well as the climate outdoors temperature during the year.

For instance, the heat storage capacity is selected to be able to heat or cool a building for 2 working days (for instance 9-11 hours) to a set temperature cycle. That set temperature can be for instance 18 degrees Celsius between 8:00 and 18:00. That set temperature should be maintained with respect to an outside temperature of for instance 2-10 degrees difference (higher and lower) with respect to that set temperature. Furthermore, the required fresh airflow is determined. From these values, a required volume of PCM can be calculated, and the amount of PCM units 1. With an airflow of below 2 m/s passing a PCM unit 1, the configuration of a climate system using for instance the PCM modules of figure 7 can be determined.

In order to provide an efficient energy transfer, when using a flow of air, the speed of the air and the dimensions of the channels and space between PCM units is set to provide a laminar flow of air. This in general means setting all the sizes and speeds such that the Reynolds number is below 2000. In the PCM module of figure 8, additionally flow-guiding plates can be provided in the inlet and exit channel and connecting to the PCM units 1. In an embodiment, these plates are parallel or substantially parallel to the longitudinal direction of the channel.

Figure 8 shows an embodiment of a PCM Module. The indentations 7 of the PCM unit 1 provides grooves that allow insertion of spacers, additional heat conductors, or, like in this embodiment, fixing parts that allows connecting the PCM units to a further part. In this embodiment, a panel 200 is provided with one or more rails or ribs 201 that are configured to fit into the indentations 7. In an embodiment, fixing parts can be provided having a coupling part that can fit into an indentation 7, and a further end that allows coupling to a further part, like the panel 200. For instance, that further end may be snapped, glued, or in another way fixed or coupled to the further part. The panel 200 may be part of a floor or a wall.

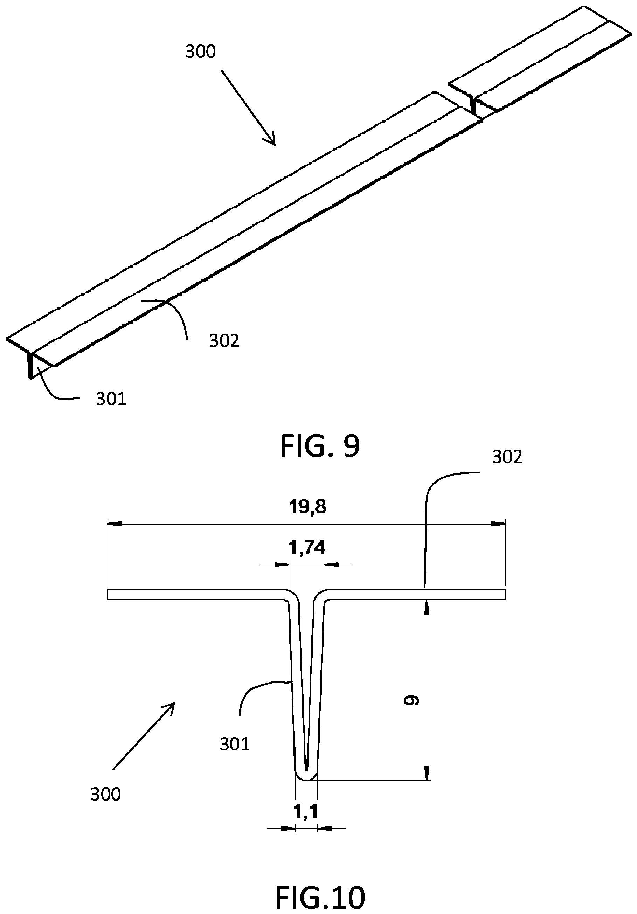

The amount of heat-conducting elements that are inserted in the indentations can be varied. Thus, heat transfer between panel 200 and the PCM in the PCM unit can be selected such that in a particular application extreme undercooling of the inorganic PCM can be avoided. In an embodiment, the PCM module in Fig. 8 forms a wall of a building space. Panel 200 faces the space and forms a intermediate heat conductive material between the space and the PCM unit 1. The heat transfer characteristic between panel 200 and PCM unit 1 is defined by the contact surface between panel 200 and PCM unit 1. The contact surface can be increased by increasing the number and/or size of ribs 201. An increase of contact surface improves the thermal conductivity of the construction between air in the building space and the PCM material in the PCM unit 1. In figures 9 and 10, a perspective view and cross sectional view are shown of an insert 300. In an embodiment, the insert is of a conductive material, for instance a metal line aluminium. The insert 300 has a lip 301, having a thickness adapted for insertion in an indentation 7 of a PCM unit. The lip 301 flares out a little. If the insert is flexible, allowing the lip parts to be pushed together, the insert can be biased into an indentation 7 of a PCM unit. For an indentation with an inner width of about 1.1, the insert 300 may flex a little. Pushing the parts of lip 301 together can fix lip 301 in an indentation 7. The surface area of the lips or rims 302 modifies the heat transfer of the PCM unit. Installing more or less of these inserts 300 allows modification of the heat transfer properties of the PCM unit. The surface of rims 302 can be glued upon a further surface, thus attaining more or less the embodiment of figure 8. Using heat-conductive glue may allow modification of the heat transfer and heat storage characteristics of the PCM unit and PCM module.

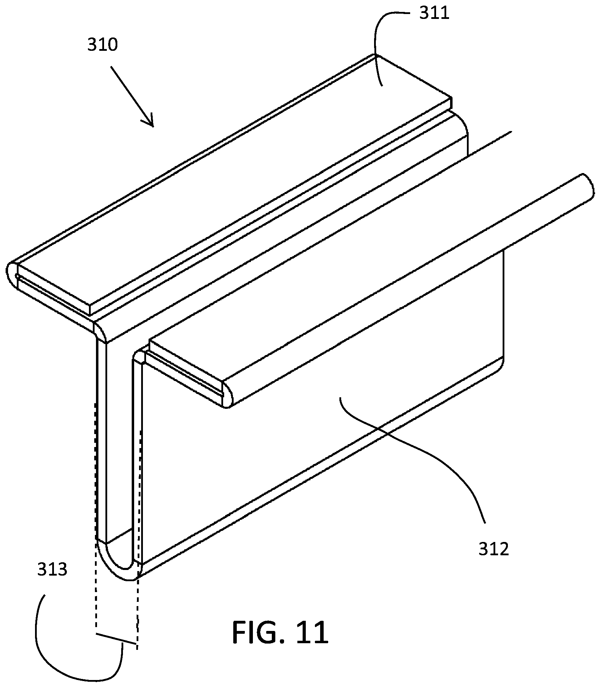

Furthermore, using simple spacers that are inserted into the indentations of neighbouring PCM units, the PCM units can be coupled, for instance to form a stack of PCM units. The interspacing between PCM units is fixed. The spacers may thus define the interspacing. In figure 11, an example of an embodiment of a spacer 310 is shown. In this embodiment, the lips 311 are inserted in a indentations 7 of opposing PCM units. This, the thickness of spacer end 312, indicated with 313, defines the distance or interspacing between subsequent PCM units.

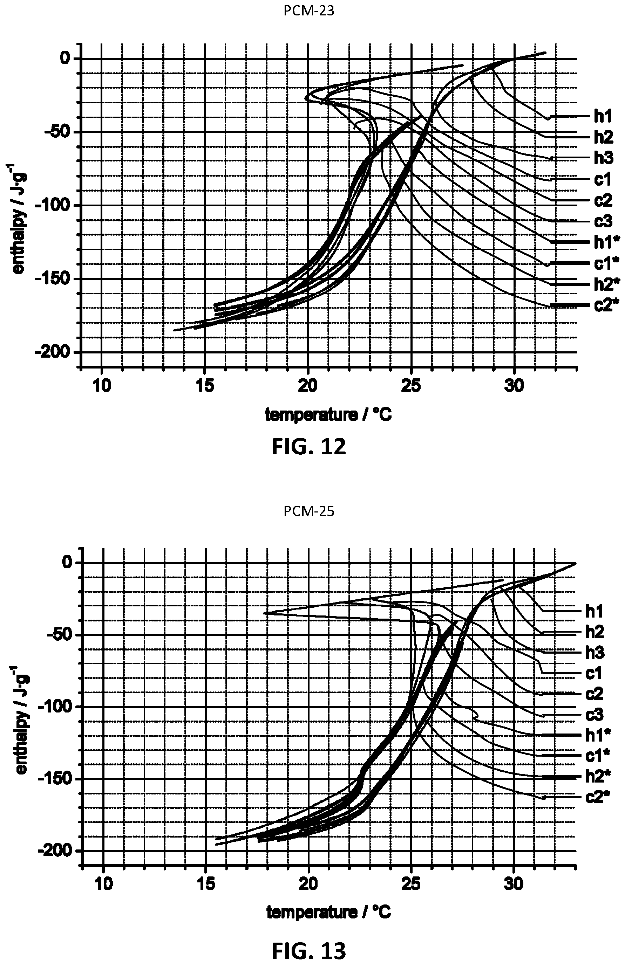

In figures 12 and 13, measurements on PCM material are shown. In both cases, the PCM material was calciumchloride hexahydrate in water. In figure 12, the PCM material has a melting temperature set at 23°C, in figure 13 the melting temperature of the PCM is set at 25°C. These measurements confirm the effect of the cycles of melting PCM material and cooling the PCM.

In order to obtain the results of figures 12 and 13, the T-history method is used to determine the change in enthalpy as a function of temperature of phase change materials (PCM), and to observe sub cooling and solidification behaviour. Standard calorimetric methods such as DSC are designed for small samples of typically less than 40 µl. Samples of inhomogeneous materials and composites of that size are not characteristic for the bulk material. With the T-history method, sample sizes of several ml are used, and therefore this method is suitable for a wider range of materials. Therefore, the T-history method was selected for the investigation of the samples. Further on, due to the large sample size, the observed degree of subcooling is closer to that in a real application.

The tests were done in the following way. Two identical tubes, one containing the sample and the other a reference substance, are exposed to sharp changes in surrounding temperature. The temperature versus time curves of the sample and the reference are recorded simultaneously. From the temperature curve and thermal data of the reference, the heat flow to the surrounding is determined and applied to the sample. This way the enthalpy change in the sample is determined as a function of temperature.

The PCM is being heated and agitated until it is completely molten to facilitate the filling of a representative sample). Firstly, three regular heating and cooling measurements are carried out on each sample. Secondly, a modified method of measuring the enthalpy versus temperature plot is carried out. For this purpose the ongoing heating measurement is aborted shortly before the PCM is molten completely. Thus at the beginning of the subsequent cooling measurement the PCM contains seed crystals, which avoid or strongly reduce subcooling.

The results are presented in the same fashion. Every evaluable heating or cooling measurement has its dedicated color in the enthalpy versus temperature plot. Regular measurements are tagged "hX" or "cX". Modified measurements are named "hX*" or "cX*", where "h" identifies heating measurements and "c" cooling measurements. "X" is a number which corresponds to the chronology of the measurement, compare the respective measurement protocols.

Both graphs show the effect of supercooling. The rightmost curves are the effect of for instance melting the PCM during use. The leftmost curves are the effect of cooling the PCM. At a certain moment, the PCM needs to be regenerated again. If the PCM is melted completely, the curves that are at the top the rightmost curves apply, continuing to temperatures above 30°C. If heating stops before complete melting has occurred, the rightmost curves stop at about (25.5°C, -60 J/g) (fig. 12) and (27.5°C, -55 J/g) (fig. 13).

When regenerating (cooling) the PCM, the leftmost (cooling) curves apply. The PCM at that stage is at certain temperature. Thus, before the PCM starts to become solid again, first the temperature must drop until it reaches a point on one of the leftmost curves. If the temperature is above the complete melting temperature, i.e., above 25.5 and 27.5, respectively, the "supercooling" curves will be picked up. Thus, the temperature will need to drop to 20°C (figure 12, PCM-23) or to 18°C (figure 13, PCM-25).

If the PCM is not melted completely (i.e., the temperature of the entire PCM is still below 25.5°C or 27.5°C, respectively, the centre curves apply. In such a case, a temperature of 25°C (figure 12) or 27°C (figure 13) is sufficient to start freezing of the PCM again. The surface of the hysteresis indicates the energy needed to regenerate the PCM. When coming in the supercooling region, it is evident that the area of the hysteresis, i.e., the area between the right curves and the left curves, is much larger that when being able to follow the curves starting at (25.5°C, -40J/g) (fig. 12) or (27.5°C, - 40J/g) (fig. 13).

This confirms that the PCM units should be designed in such a way that the dimensions of the cells is such that complete melting or freezing of the PCM in a cell is prevented in most of the operational conditions in which the PCM units are used. Thus, in the current invention cell dimensioning is used to prevent supercooling of the PCM. In this design, the compartments of the PCM units provide the cell.

Usually, the invention is used for conditioning flows of air, in particular at least the temperature of flows of air.

The current PCM units can be summarized in the following way. The PCM units described allow PCM units that are universally applicable, they retain their shape and are sufficiently strong. The container is suitable for inorganic PCM, easily applicable and allow to be assembled into larger PCM modules (such as comprising a stack of PCM units). Furthermore, the shape of the container is optimized in both fluid flow aspects as well as heat transfer.

### Universal applicability.

- The PCM units can be applied both horizontally, slanted and vertically without degradation via segregation of the PCM.
- The PCM units can be applied both stationary in climate systems, but also dynamically, for instance in the transportation of organs. The latent heat capacity of the PCM units does not significantly degrade. Thus, the quality can be assured.
- The shape of the PCM units allows application in forced convection systems (induction units but also convection ventilators and batteries in air treatment cabinets) but also in climate systems using free convection combined with heat transfer via radiation, like applications in ceilings, walls and floors
- A further universal applicability follows from the fact that the PCM unit is easily adaptable using the inserts in the indentations described above. The inserts also allow adjustment of heat transfer via the introduction of heat-guiding elements, but also easy modification of PCM panel interspacing. Metal fins can be inserted into the indentations.
- Using polymer containers allows application in less favorable conditions, for instance in corrosive environments.

### Retaining shape and strength.

The indentations forming elongated chambers not only prevent segregation of the PCM, in particular of inorganic PCM, but also provide a possibility to use inserts and clips for mounting PCM units. The indentations increase the strength of for instance the facing walls and improve the dimensional stability of the thickness of a PCM-unit and the dimensional stability in longitudinal direction of the PCM-unit . This is relevant when filling the container with PCM, but also during melting of the PCM. More ridged PCM units allow to have smaller PCM unit interspacing.

### Suited for inorganic PCM.

Because of its shape-retaining property and its compartments, the PCM units are suited for inorganic inhomogeneous salt water mixtures. This in turn allows the use of economic thermoplastic plastics like HDPE and PP. Additional heat conductive measures like the addition of carbon is not required. Thus, pure PCM can be used, without micro encapsulation.

### Easy applicability and assembly into PCM modules.

The way of providing the compartments also increases the way in which the PCM units can be assembled.

### Optimized in view of flow dynamics and heat transfer.

PCM can be packed in cylinders, spheres, or in panels, for instance. It was found that PCM-filled cylinders would require a much smaller interspacing, which is more difficult to achieve. This also increases air resistance and thus the use of energy.
- Inhomogeneity of PCM due to segregation is prevented through the limited height and width of the elongated compartments.
- Undercooling can be prevented by selecting an interspacing between PCM units that is suitable for a particular application. As an indirect consequence, the heat transfer between air and PCM material can be modified by varying the interspacing, thus preventing the complete melting of the PCM, but allowing reversible behaviour. The simple modification of interspacing between PCM units and/or application of more or less additional fins in the indentations modifies heat transfer.
- Compartments increase the dimensional stability of the PCM units.
- The lower thermal conductivity compared to for instance aluminium is compensated via interspacing and/or more or less fins of thermal conductive material in the indentations. The invention pertains to a polymer panel having compartments and a shape to contain PCM.

It will also be clear that the above description and drawings are included to illustrate some embodiments of the invention, and not to limit the scope of protection. Starting from this disclosure, many more embodiments will be evident to a skilled person and are within the scope of protection and the essence of this invention and which are obvious combinations of prior art techniques and the disclosure of this patent.

## Claims

1. A container (2) for PCM, wherein said container (2) is produced using blow-moulding and has the shape of a rectangular panel with a longitudinal axis, a front and back facing wall (5, 5'), end walls (13, 14) and longitudinal walls (3, 4) enclosing a container cavity, said blow-moulded container (2) further comprising a filling opening (6) and said container cavity is divided into a series of elongated compartments (15) and comprising partitioning walls (11) extending between said front and back facing wall (5, 5'), **characterized in that** said partitioning walls (11) comprise barriers (8) that extend away from the longitudinal direction and away from the partitioning wall (11), in at least one transverse direction, in particular the barriers (8) extend between 1 and 4 mm, and said partitioning walls (11) have a mutual distance of less than 2 cm, and wherein said front facing wall (5) and back facing wall (5') have a mutual distance of less than 3 cm.

2. The container (2) of claim 1, wherein said elongated compartments are in fluid communication with said filling opening (6).

3. The container (2) of claim 1 or 2, wherein said elongated compartments (15) are in fluid communication with one another.

4. The container (2) of any one of the preceding claims, wherein at least one of said partitioning walls (11) is formed by an indentation (7) formed by a fold in one facing wall (5, 5') and runs up to an inner surface of the opposite facing wall (5', 5).

5. The container (2) of any one of the preceding claims, wherein said partitioning walls (11) extend up to a distance from the end walls (13, 14).

6. The container (2) of any one of the preceding claims, wherein said barriers (8) are provided at the longitudinal ends of the partitioning walls (11), wherein in particular said barriers extend at least in the same direction.

7. The container (2) of any one of the preceding claims, wherein at least one of said facing walls (5, 5') comprises a series of indentations (7) formed by folds in that facing wall (5, 5') and which run up to an inner surface of the opposite facing wall (5, 5') and extend up to a distance from the end walls (13, 14) of said container (2), said indentations (7) providing the partition walls (11) as dividers dividing said container (2) into said series of compartments (15) that are in fluid connection with one another.

8. The container (2) of claim 7, wherein said indentations (7) have an inner width (A) of less than 2 mm.

9. The container (2) of any one of the preceding claims 7 or 8, wherein said indentations (7) run substantially in longitudinal direction of said container (2), extending over 80-98 % of the length of the container (2), in particular extending over 90%-98% of the length of the container (2).

10. The container (2) of any one of the preceding claims 7-9, wherein said indentations (7) extend in longitudinal direction of said container (2), and have ends near the end walls (13, 14) of the container (2), said ends provided with said barriers (8) extending away from said longitudinal direction.

11. The container (2) of any one of the preceding claims, wherein said container (2) has a length (L) of between 40 and 100 cm, a width (W) of between 15 and 30 cm, and a thickness (T) of 0.5-2 cm, and a wall thickness of between 0.5 and 3 mm, in particular said container (2) when filled with PCM provides a PCM layer with a thickness (S) of between 0.5 and 1.5 cm.

12. A PCM unit (1) comprising the container (2) of any one of the preceding claims filled with PCM, in particular said PCM substantially consisting of an aqueous solution of a salt hydrate.

13. A PCM module, comprising a series of PCM units of the preceding claim, wherein PCM units are positioned with their facing walls (5, 5') parallel, having an interspacing of less than 1 cm, in particular less than 0.5 cm, in particular wherein said PCM module in use defines an incoming flow direction of the fluid flow, and said PCM units are arranged with their longitudinal axes substantially cross to the incoming flow direction, in particular said facing walls define a normal and said normal is at an angle of 10-40 degrees with respect to the incoming flow direction.

14. A climate system for a building, arranged for controlling at least the temperature, said climate system comprising at least one PCM module of claim 13, further provided with an air displacement unit adapted for providing a laminar flow of air along said PCM units, in particular wherein said climate system has an average design heating and/or cooling capacity and said climate system comprises an amount of PCM in said at least one PCM module selected such that the capacity of the PCM is about 105-130 % of the average design capacity, in particular 110% - 120 % of the average design capacity.

15. A method for conditioning at least the temperature in a building space, comprising a climate system for a building, arranged for controlling at least the temperature, said climate system comprising at least one PCM module, comprising a series of PCM units, said PCM unit (1) comprising the container (2) of any one of the preceding claims filled with PCM, in particular said PCM substantially consisting of an aqueous solution of a salt hydrate, wherein PCM units are positioned with their facing walls parallel, having an interspacing of less than 1 cm, in particular less than 0.5 cm, said climate system further provided with an air displacement unit adapted for providing a laminar flow of air along said PCM units, wherein in said method an airflow is passed though said PCM module at a laminar flow speed.

## Patentansprüche

1. Behälter (2) für PCM, wobei der Behälter (2) durch Blasformen hergestellt ist und die Form einer rechteckigen Platte mit einer Längsachse, einer nach vorne- und nach hinten gerichtete gegenüberliegenden Wand (5, 5 '), Stirnwänden (13, 14) und Längswände (3, 4), die einen Behälterhohlraum umschließen, wobei der blasgeformte Behälter (2) ferner eine Einfüllöffnung (6) aufweist und der Behälterhohlraum in eine Reihe von länglichen Kammern (15) unterteilt ist und Trennwände (11) aufweist, die sich zwischen der vorderen und der hinteren gegenüberliegenden Wand (5, 5 ') erstrecken, **dadurch gekennzeichnet, daß** die Trennwände (11) Barrieren (8) aufweisen, die sich von der Längsrichtung weg erstrecken, in mindestens einer Querrichtung, insbesondere erstrecken der Barrieren (8) sich zwischen 1 und 4 mm, und haben die Trennwände (11) einen gegenseitigen Abstand von weniger als 2 cm, und wobei die nach vorne gerichtete Wand (5) und die nach hinten gerichtete Wand (5') ein gegenseitiger Abstand von weniger als 3 cm haben.

2. Behälter (2) nach Anspruch 1, wobei die länglichen Kammern in Fluidverbindung mit der Einfüllöffnung (6) stehen.

3. Behälter (2) nach Anspruch 1 oder 2, wobei die länglichen Kammern (15) in Fluidverbindung miteinander stehen.

4. Behälter (2) nach einem der vorhergehenden Ansprüche, wobei mindestens eine die Trennwände (11) durch eine Vertiefung (7) gebildet ist, die durch eine Falte in einer gegenüberliegenden Wand (5, 5 ') gebildet ist und bis zu einer Innenfläche von die gegenüberliegende Wand (5, 5 ') verläuft.

5. Behälter (2) nach einem der vorhergehenden Ansprüche, wobei sich die Trennwände (11) bis zu einem Abstand von den Endwänden (13, 14) erstrecken.

6. Behälter (2) nach einem der vorhergehenden Ansprüche, wobei die Barrieren (8) an den Längsenden der Trennwände (11) vorgesehen sind, wobei ins besondere sich die Barrieren mindestens in die gleiche Richtung erstrecken.

7. Behälter (2) nach einem der vorhergehenden Ansprüche, wobei mindestens eine der gegenüberliegenden Wände (5, 5 ') eine Reihe von Vertiefungen (7) aufweist, die durch Falten in dieser gegenüberliegenden Wand (5, 5') gebildet sind und welche bis zu einer Innenfläche der gegenüberliegenden Wand (5, 5 ') verlaufen und sich bis zu einem Abstand von den Endwänden (13, 14) des Behälters (2) erstrecken, wobei die Vertiefungen (7) die Trennwände (11) vorsehen als Teiler, die den Behälter (2) in die Reihe von Kammern (15) unterteilen, die in Fluidverbindung miteinander stehen.

8. Behälter (2) nach Anspruch 7, wobei die Vertiefungen (7) eine innere Breite (A) von weniger als 2 mm aufweisen.

9. Behälter (2) nach einem der vorhergehenden Ansprüche 7-8, wobei die Vertiefungen (7) im Wesentlichen in Längsrichtung des Behälters (2) verlaufen und sich über 80 bis 98% der Länge des Behälters (2) erstrecken, insbesondere sich erstrecken über 90% -98% der Länge des Behälters (2).

10. Behälter (2) nach einem der vorhergehenden Ansprüche 7-9, wobei sich die Vertiefungen (7) in Längsrichtung des Behälters (2) erstrecken und Enden aufweisen in die nähe den Endwänden (13, 14) des Behälters (2) wobei die Enden mit Barrieren (8) versehen sind, die sich von der Längsrichtung weg erstrecken.

11. Behälter (2) nach einem der vorhergehenden Ansprüche, wobei der Behälter (2) eine Länge (L) zwischen 40 und 100 cm, eine Breite (W) zwischen 15 und 30 cm und eine Dicke (T) von 0,5 bis 2 cm aufweist und einer Wandstärke zwischen 0,5 und 3 mm, insbesondere weist der Behälter (2), wenn er mit PCM gefüllt ist, eine PCM-Schicht mit einer Dicke (S) zwischen 0,5 und 1,5 cm auf.

12. PCM-Einheit (1), umfassend den Behälter (2) nach einem der vorhergehenden Ansprüche, der mit PCM gefüllt ist, insbesondere besteht das PCM im Wesentlichen aus einer wässrigen Lösung eines Salzhydrats.

13. PCM-Modul, umfassend eine Reihe von PCM-Einheiten nach dem vorhergehenden Anspruch, wobei PCM-Einheiten mit ihren gegenüberliegenden Wänden parallel angeordnet sind und einen Abstand von weniger als 1 cm, insbesondere weniger als 0,5 cm aufweisen, insbesondere wobei das PCM-Modul bei der Verwendung eine Eingangsströmungsrichtung des Fluidstroms definiert und die PCM-Einheiten mit ihren Längsachsen im Wesentlichen quer zur Eingangsströmungsrichtung angeordnet sind, wobei insbesondere die gegenüberliegenden Wände eine Normale definieren und Diese Normale liegt in einem Winkel von 10-40 Grad zur Eingang s Strömung srichtung.

14. Klimasystem für ein Gebäude, das zum Steuern mindestens der Temperatur eingerichtet ist, wobei das Klimasystem mindestens ein PCM-Modul nach Anspruch 13 umfasst, das ferner mit einer Luftverdrängungseinheit versehen ist, die zum Bereitstellen einer laminaren Luftströmung entlang der PCM-Einheiten ausgelegt ist, insbesondere wobei das Klimasystem eine durchschnittliche Designheizkapazität und / oder Designkühlkapazität aufweist und das Klimasystem eine Menge an PCM in dem mindestens einen PCM-Modul umfasst, das so ausgewählt ist, dass die Kapazität des PCMs etwa 105% bis 130% beträgt der durchschnittlichen Entwurfskapazität, insbesondere 110% - 120% der durchschnittlichen Entwurfskapazität.

15. Verfahren zum Konditionieren mindestens der Temperatur in einem Gebäuderaum, umfassend ein Klimasystem für ein Gebäude, eingerichtet zum Steuern mindestens der Temperatur, wobei das Klimasystem mindestens ein PCM-Modul umfasst, dass mit einer Reihe von PCM-Einheiten versehen ist, wobei die PCM-Einheiten der Behälter nach einem der vorhergehenden Ansprüche der mit PCM gefüllt ist umfasst, insbesondere besteht das PCM im Wesentlichen aus einer wässrigen Lösung eines Salzhydrats, wobei die PCM-Einheiten mit ihren Längsachsen im Wesentlichen quer zur Eingangsströmungsrichtung angeordnet sind, einen Abstand von weniger als 1 cm, insbesondere weniger als 0,5 cm aufweisen, wobei das Klimasystem ferner mit einer Luftverdrängungseinheit versehen ist, die zum Bereitstellen einer laminaren Luftströmung entlang der PCM-Einheiten ausgelegt ist, wobei in das Verfahren ein Luftstrom mit einer laminaren Strömungsgeschwindigkeit durch das PCM-Modul geleitet wird.

## Revendications

1. Un récipient (2) pour MCP (matériau à changement de phase), ledit récipient (2) étant fabriqué par soufflage et ayant la forme d'un panneau rectangulaire avec un axe longitudinal, une paroi opposée frontale et une paroi opposée arrière (5, 5'), des parois terminales (13, 14) et des parois longitudinales (3, 4) renfermant une cavité de récipient, ledit récipient moulé par soufflage (2) comprenant en outre une ouverture de remplissage (6) et ladite cavité de récipient étant divisée en une série de compartiments allongés (15) et comprenant des cloisons de séparation (11) s'étendant entre lesdites parois frontale et arrière (5, 5'), **caractérisé en ce que** lesdites parois de séparation (11) comprenant des barrières (8) qui s'étendent à l'opposé de la direction longitudinale, dans au moins une direction transversale, en particulier les barrières (8) s'étendent entre 1 et 4 mm, et lesdites parois de séparation (11) ont une distance mutuelle inférieure à 2 cm, et dans lequel ladite paroi opposée frontale (5) et ladite paroi opposée arrière (5') ont une distance mutuelle de moins de 3 cm.

2. Récipient (2) selon la revendication 1, dans lequel lesdits compartiments allongés (15) sont en communication fluidique avec ladite ouverture de remplissage (6).

3. Conteneur (2) selon la revendication 1 ou 2, dans lequel lesdits compartiments allongés (15) sont en communication fluide les uns avec les autres.

4. Conteneur (2) selon l'une quelconque des revendications précédentes, dans lequel une de ses parois de séparation (11) est formée par une indentation (7) formée par un pli dans une des parois opposée (5, 5') et s'étend jusqu'à une surface intérieure d'une des parois opposée (5', 5) opposante.

5. Conteneur (2) selon l'une quelconque des revendications précédentes, dans lequel lesdites parois de séparation (11) s'étendent jusqu'à une distance des parois terminales (13, 14).

6. Conteneur (2) selon l'une quelconque des revendications précédentes, dans lequel lesdites barrières (8) sont prévues aux extrémités longitudinales des parois de séparation (11), dans lequel particulièrement lesdites barrières s'étendent au moins dans la même direction.

7. Conteneur (2) selon l'une quelconque des revendications précédentes, dans lequel au moins l'une desdites parois opposées (5, 5') comprend une série d'indentations (7) formées par des plis dans cette paroi opposée (5, 5') et qui s'étendent jusqu'à une surface intérieure de la paroi opposée (5, 5') opposante et s'étendent jusqu'à une distance des parois terminales (13, 14) dudit conteneur (2), lesdites indentations (7) constituant lesdites parois de séparation (11) comme des diviseurs divisant ledit récipient (2) en ladite série de compartiments (15) qui sont en connexion de fluide les uns avec les autres.

8. Conteneur (2) selon revendication 7, dans lequel lesdites indentations (7) ont une largeur intérieure (A) inférieure à 2 mm.

9. Conteneur (2) selon l'une quelconque des revendications précédentes 7 ou 8, dans lequel lesdites indentations (7) s'étendent sensiblement dans la direction longitudinale dudit conteneur (2), s'étendant sur 80 à 98% de la longueur du conteneur (2), en particulier plus de 90% à 98% de la longueur du récipient (2).

10. Conteneur (2) selon l'une quelconque des revendications précédentes 7-9, dans lequel lesdites indentations (7) s'étendent dans la direction longitudinale dudit conteneur (2) et ont des extrémités proches des parois terminales (13, 14) du conteneur (2), lesdites extrémités munies de barrières (8) s'éloignant de ladite direction longitudinale.

11. Conteneur (2) selon l'une quelconque des revendications précédentes, dans lequel ledit conteneur (2) a une longueur (L) comprise entre 40 et 100 cm, une largeur (W) comprise entre 15 et 30 cm et une épaisseur (T) de 0,5 à 2 cm et une épaisseur de paroi comprise entre 0,5 et 3 mm, en particulier ledit conteneur (2), lorsqu'il est rempli de MCP, fournit une couche de MCP d'une épaisseur (S) comprise entre 0,5 et 1,5 cm.

12. Unité de MCP (1) comprenant le récipient (2) de l'une quelconque des revendications précédentes rempli de MCP, en particulier ledit MCP consistant essentiellement en une solution aqueuse d'un sel hydraté.

13. Module MCP, comprenant une série d'unités MCP de la revendication précédente, dans lequel des unités MCP sont positionnées avec leurs parois opposées (5, 5') parallèles, ayant un espacement entre les pas inférieur à 1 cm, en particulier inférieur à 0,5 cm, en particulier dans lequel ledit module MCP, en cours d'utilisation, définit une direction d'écoulement entrant de l'écoulement de fluide, et lesdites unités MCP sont agencées avec leurs axes longitudinaux pratiquement transversaux à la direction d'écoulement entrant, en particulier lesdites parois opposées définissent une normale et ladite normale fait un angle de 10 à 40 degrés par rapport à la direction du flux entrant.

14. Système de climatisation pour un bâtiment, conçu pour contrôler au moins la température, ledit système de climatisation comprenant au moins un module MCP selon revendication 13, pourvu en outre d'une unité de déplacement d'air adaptée pour fournir un écoulement d'air laminaire le long desdites unités MCP, en particulier dans lequel ledit système de climatisation a une capacité moyenne de chauffage et / ou de refroidissement de conception et ledit système de climatisation comprend une quantité de MCP dans ledit au moins un module de MCP sélectionné de telle sorte que la capacité du MCP soit d'environ 105% à 130 % de la capacité de conception moyenne, en particulier de 110% à 120% de la capacité de conception moyenne.

15. Procédé pour conditionner au moins la température dans un espace de bâtiment, comprenant le système de climatisation d'un bâtiment, arrangé pour contrôler au moins la température, ladite système de climatisation comprenant au moins une module MCP, comprenant des séries d'unités MCP, ladite unité MCP comprenant ledit conteneur (2) selon l'une quelconque des revendications précédentes rempli de MCP, en particulier ledit MCP consistant essentiellement en une solution aqueuse d'un sel hydraté, dans lequel des unités MCP sont positionné avec leur parois opposées parallèlement, ayant un espacement inférieur à 1 cm, en particulier inférieur à 0,5 cm, ladite système de climatisation pourvu en outre d'une unité de déplacement d'air adaptée pour fournir un écoulement d'air laminaire le long desdites unités MCP, dans lequel dans ce procède un flux d'air est passé à travers ledit module MCP à une vitesse d'écoulement laminaire.
